# EUROPEAN PATENT APPLICATION

(11) **EP 4 603 464 A1**
(43) Date of publication of application: **20.08.2025**
(21) Application number: 23877227.1
(22) Date of filing: 05.10.2023
(51) Int. Cl.: C03C 8/02, C03C 8/04, C03C 8/08

(54) **GLASS POWDER COMPOSITE, AND GLASS POWDER COMPOSITE PRODUCTION METHOD**

(30) Priority: 12.10.2022 JP 2022164278
(71) Applicant: OSAKA UNIVERSITY, Suita-shi Osaka 565-0871 (JP); GC Corporation, Sunto-gun, Shizuoka 410-1307 (JP)
(72) Inventor: IMAZATO, Satoshi, Suita-shi, Osaka 565-0871 (JP); KITAGAWA, Haruaki, Suita-shi, Osaka 565-0871 (JP); AKIYAMA, Ayaka, Tokyo 174-8585 (JP); KONO, Tomoki, Tokyo 174-8585 (JP); KATO, Katsuhito, Tokyo 174-8585 (JP)
(74) Representative: Müller-Boré & Partner Patentanwälte PartG mbB
(86) International application number: PCT/JP2023/036427
(87) International publication number: WO 2024/080222

(57) **Abstract**

A glass powder composite includes a first glass powder including first glass, and a second glass powder including second glass. The first glass includes at least one element, and is eluted during a first period. The second glass includes at least one element different from the at least one element of the first glass, and is eluted during a second period different from the first period.

## Description

### TECHNICAL FIELD

The present invention relates to glass powder composites and methods of producing glass powder composites.

### BACKGROUND ART

Sustained ion release glass that sustainably releases functional ions has been known. For example, there is a technique in which inorganic glass particles that release phosphorus ions or calcium ions into water are used as a granular soil modifier (see Patent Document 1). Moreover, there is a technique of using, in a resin molded article, antibacterial glass from which silver ions known to have an antibacterial effect are eluted (Patent Document 2). Further, there is a technique of using bioglass in medical applications, such as a material of repairing bones, or medical implants (Patent Document 3 and Patent Document 4). Furthermore, there is a technique of using sustained ion release glass in a deodorant composition (see Patent Document 5).

### CITATION LIST

### PATENT DOCUMENT

Patent Document 1: Japanese Unexamined Patent Application Publication No. 2000-41482
Patent Document 2: Japanese Patent No. 6604499
Patent Document 3: Japanese Patent No. 6622416
Patent Document 4: Japanese Unexamined Patent Application Publication No. 2020-535881
Patent Document 5: International Publication No. WO2019/189851

### SUMMARY OF THE INVENTION

### TECHNICAL PROBLEM

It is difficult for the sustained ion release glass of the related art to vary a sustained-release action of ions according to the time elapsed.

One aspect of the present invention aims to provide a glass powder composite that can vary a sustained-release action of ions according to the time elapsed.

### SOLUTION TO THE PROBLEM

According to one aspect of the present invention, a glass powder composite includes a first glass powder including first glass, and a second glass powder including second glass. The first glass includes at least one element, and is eluted during a first period. The second glass includes at least one element different from the at least one element of the first glass, and is eluted during a second period different from the first period.

### EFFECTS OF THE INVENTION

According to one aspect of the present invention, a glass powder composite that can vary a sustained-release action of ions according to the time elapsed can be provided.

### BRIEF DESCRIPTION OF THE DRAWINGS

[Fig. 1] Fig. 1 is a graph depicting a change in a residual ratio of examples of a glass powder (Glass 1 to Glass 9).
[Fig. 2] Fig. 2 is a graph depicting a change in a residual ratio of glass powders (Glass 1, Glass 5, and Glass 9) constituting the glass powder composite of Example 1.
[Fig. 3] Fig. 3 is a graph depicting a change in a residual ratio of glass powders (Glass 3, Glass 4, and Glass 7) constituting the glass powder composite of Example 2.
[Fig. 4] Fig. 4 is a graph depicting a change in a residual ratio of glass powders (Glass 2, Glass 4, and Glass 7) constituting the glass powder composite of Example 3.
[Fig. 5] Fig. 5 is a graph depicting a change in a residual ratio of glass powders (Glass 1 and Glass 6) constituting the glass powder composite of Example 4.
[Fig. 6] Fig. 6 is a graph depicting a change in a residual ratio of glass powders (Glass 5 and Glass 8) constituting the glass powder composite of Example 5.
[Fig. 7] Fig. 7 is a graph depicting a change in a residual ratio of glass powders (Glass 3, Glass 6, and Glass 8) constituting the glass powder composite of Comparative Example 1.
[Fig. 8] Fig. 8 is a graph depicting a change in a residual ratio of glass powders (Glass 2, Glass 5, and Glass 7) constituting the glass powder composite of Comparative Example 2.
[Fig. 9] Fig. 9 is a graph depicting a change in a residual ratio of glass powders (Glass 2 and Glass 7) constituting the glass powder composite of Comparative Example 3.
[Fig. 10] Fig. 10 is a graph depicting a change in a residual ratio of glass powders (Glass 1 and Glass 4) constituting the glass powder composite of Comparative Example 4.
[Fig. 11] Fig. 11 is a graph depicting a change in a residual ratio of glass powders (Glass 8 and Glass 9) constituting the glass powder composite of Comparative Example 5.

### Detailed Description of the Embodiments

Embodiments of the present invention will be described in detail hereinafter.

### <Glass powder composite>

The glass powder composite according to the present embodiment includes a first glass powder and a second glass powder. In the present specification, the glass powder composite encompasses a glass powder composite that includes at least two types of glass powders.

The first glass powder includes first glass including at least one element.

In the present specification, the term "glass" includes not only amorphous glass, but also crystalline glass, and also includes glass ceramics that partially includes glass. The glass powder refers to powdered glass.

Note that as a size of the powder, the particle size is preferably 0.01 µm or greater and 100 µm or less, more preferably 0.1 µm or greater and 50 µm or less, and yet more preferably 1 µm or greater and 20 µm or less. In the present specification, the particle size refers to a median diameter (D50) at which a volume-based cumulative distribution measured by a laser diffraction-scattering method is 50%.

The first glass is, but not limited to, preferably phosphate glass. Since the phosphate glass includes phosphorus (P), a composition of the phosphate glass can be vitrified even when the composition includes a small amount of a component for forming a network, compared with silicate glass or borate glass. Therefore, the phosphate glass can include various components, and these components are dissolved in water and are easily sustainably released in the form of ions (sustained release of ions readily occurs or a high level of a sustained-release action of ions is achieved).

In the present specification, sustained release of ions encompasses a behavior such that components included in a glass powder are dissolved and gradually released in an ionic state.

The phosphate glass includes phosphorous pentoxide (P₂O₅). P₂O₅ contributes to formation of a network in glass. Moreover, since the phosphate glass includes P₂O₅, phosphate ions (PO₄³⁻) released from the phosphate glass can impart an effect of preventing remineralization of dental tissues or tooth decay.

An amount of P₂O₅ in the phosphate glass is preferably 40 percent by mass or greater, more preferably 45 percent by mass or greater, and yet more preferably 50 percent by mass or greater. Since the amount of P₂O₅ in the phosphate glass is 40 percent by mass or greater, glass is easily produced.

Note that the upper limit of the amount of P₂O₅ is not particularly limited, but the upper limit is preferably 90 percent by mass or less, more preferably 80 percent by mass or less, and yet more preferably 70 percent by mass or less, from the viewpoint such that glass can be produced without a melting temperature of the glass becoming excessively high.

The first glass is preferably completely free of silicon oxide (SiO₂). In the case where the first glass includes SiO₂, an amount of SiO₂ in the first glass is preferably 5 percent by mass or less. Since the first glass is completely free of SiO₂ or includes SiO₂ in the amount of 5 percent by mass or less, a decline in a sustained-release action of ions from the first glass can be inhibited.

The first glass includes at least one element. The element included in the first glass is an element constituting an ion that is sustainably released from glass (referred to as a "sustained-release ion" hereinafter).

Examples of the element included in the first glass include lithium (Li), calcium (Ca), strontium (Sr), barium (Ba), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), titanium (Ti), zirconium (Zr), tantalum (Ta), copper (Cu), silver (Ag), zinc (Zn), boron (B), gallium (Ga), tin (Sn), fluorine (F), and the like. One or more of the above elements may be included. Among the above elements, Li, Ca, Sr, Cu, Ag, Zn, B, Ga, and F are preferred.

Among the above elements, Ca and Sr are preferred in view of an improvement in acid resistance of sustained-release ions, and Zn is preferred in view of inhibition of acid production. Moreover, Ca, Zn, and F are preferred from the viewpoint that sustained-release ions have an effect of inhibiting demineralization of dental tissues, and Ca and Sr are preferred in view of promotion of ossification. Further, Cu, Ag, Zn, B, Ga, and F are preferred in view of an antibacterial effect of the sustained-release ions, and Li is preferred in view of an anti-inflammatory action of the sustained-release ions.

In the case where Li is included in the first glass, an amount of Li in the first glass is not particularly limited, and the amount of Li in the form of lithium oxide (Li₂O) is preferably 0 percent by mass or greater and 30 percent by mass or less, more preferably 1 percent by mass or greater and 25 percent by mass or less, and yet more preferably 5 percent by mass or greater and 20 percent by mass or less. Since the first glass includes Li, an anti-inflammatory action can be imparted. Since the amount of Li₂O is 30 percent by mass or less, glass without dissolubility of a constituent component of the glass into water becoming excessively high is likely to be obtained.

In the case where Ca is included in the first glass, an amount of Ca in the first glass is not particularly limited, but the amount of Ca in the form of calcium oxide (CaO) is preferably 0 percent by mass or greater and 25 percent by mass or less, more preferably 0.5 percent by mass or greater and 10 percent by mass or less, and yet more preferably 1 percent by mass or greater and 5 percent by mass or less. Since the first glass includes Ca, an acid resistance effect, an effect of inhibiting demineralization of dental tissues, and an ossification promoting action can be imparted. Since the amount of CaO is 25 percent by mass or less, glass is easily produced.

In the case where Sr is included in the first glass, an amount of Sr in the first glass is not particularly limited, but the amount of Sr in the form of strontium oxide (SrO) is preferably 0 percent by mass or greater and 50 percent by mass or less, more preferably 10 percent by mass or greater and 45 percent by mass or less, and yet more preferably 20 percent by mass or greater and 40 percent by mass or less. Since the first glass includes Sr, an acid resistance effect and an ossification promoting action can be imparted. Since the amount of SrO is 50 percent by mass or less, glass is easily produced without a melting temperature of the glass becoming excessively high.

In the case where Cu is included in the first glass, an amount of Cu in the first glass is not particularly limited, but the amount of Cu in the form of copper oxide (CuO) is preferably 0 percent by mass or greater and 10 percent by mass or less, more preferably 0.01 percent by mass or greater and 8 percent by mass or less, and yet more preferably 0.1 percent by mass or greater and 5 percent by mass or less. Since the first glass includes Cu, an antibacterial effect can be imparted. Since the amount of CuO is 10 percent by mass or less, glass is easily produced.

In the case where Ag is included in the first glass, an amount of Ag included in the first glass is not particularly limited, but the amount of Ag in the form of silver oxide (Ag₂O) is preferably 0 percent by mass or greater and 5 percent by mass or less, more preferably 0.01 percent by mass or greater and 4 percent by mass or less, and yet more preferably 0.1 percent by mass or greater and 3 percent by mass or less. Since the first glass includes Ag, an antibacterial effect can be imparted. Since the amount of Ag₂O is 5 percent by mass or less, glass is easily produced.

In the case where Zn is included in the first glass, an amount of Zn in the first glass is not particularly limited, but the amount of Zr in the form of zinc oxide (ZnO) is preferably 0 percent by mass or greater and 45 percent by mass or less, more preferably 1 percent by mass or greater and 35 percent by mass or less, and yet more preferably 5 percent by mass or greater and 30 percent by mass or less. Since the first glass includes Zn, an acid-production inhibition effect, an effect of inhibiting demineralization of dental tissues, and an antibacterial effect can be imparted. Since the amount of ZnO is 45 percent by mass or less, glass is easily produced.

In the case where B is included in the first glass, an amount of B in the first glass is an amount of B in the form of boron oxide (B₂O₃), which is preferably 0 percent by mass or greater and 10 percent by mass or less, more preferably 0.1 percent by mass or greater and 9 percent by mass or less, and yet more preferably 1 percent by mass or greater and 8 percent by mass or less. Since the first glass includes B, an antibacterial effect can be imparted. Since the amount of B₂O₃ is 10 percent by mass or less, phase separation is inhibited, and glass is easily produced.

In the case where Ga is included in the first glass, an amount of Ga in the first glass is not particularly limited, but the amount of Ga in the form of gallium oxide (Ga₂O₃) is preferably 0 percent by mass or greater and 40 percent by mass or less, more preferably 0.1 percent by mass or greater and 38 percent by mass or less, and yet more preferably 1 percent by mass or greater and 35 percent by mass or less. Since the first glass includes Ga, an antibacterial effect can be imparted. Since the amount of Ga₂O₃ is 40 percent by mass or less, glass is easily produced.

In the case where F is included in the first glass, an amount of F in the first glass is not particularly limited, but the amount of F is preferably 0 percent by mass or greater and 25 percent by mass or less, more preferably 0.1 percent by mass or greater and 24 percent by mass or less, and yet more preferably 1 percent by mass or greater and 22 percent by mass or less. Since the first glass includes F, an effect of inhibiting demineralization of dental tissues and an antibacterial effect can be imparted. Since the amount of F is 25 percent by mass or less, glass is easily produced.

Note that in the glass powder composite of the present embodiment, the first glass may include, as other elements, sodium (Na), potassium (K), and aluminum (Al), as long as the object of the present invention is not impaired.

In the case where Na is included in the first glass, an amount of Na in the first glass is not particularly limited, but the amount of Na in the form of sodium oxide (Na₂O) is preferably 1 percent by mass or greater and 40 percent by mass or less, more preferably 3 percent by mass or greater and 35 percent by mass or less, and yet more preferably 5 percent by mass or greater and 30 percent by mass or less. Since the first glass includes Na, a melting temperature of glass is reduced, and dissolubility of the glass can be further enhanced. Since the amount of Na₂O is 40 percent by mass or less, glass without dissolubility of a constituent component of the glass into water becoming excessively high is likely to be produced.

In the case where K is included in the first glass, an amount of K in the first glass is not particularly limited, but the amount of K in the form of potassium oxide (K₂O) is preferably 1 percent by mass or greater and 40 percent by mass or less, more preferably 3 percent by mass or greater and 35 percent by mass or less, and yet more preferably 5 percent by mass or greater and 30 percent by mass or less. Since the first glass includes K, a melting temperature of glass is reduced, and dissolubility of the glass can be further enhanced. Since the amount of K₂O is 40 percent by mass or less, glass without dissolubility of a constituent component of the glass into water becoming excessively high is likely to be produced.

In the case where Al is included in the first glass, an amount of Al in the first glass is not particularly limited, but the amount of Al in the form of aluminum oxide (Al₂O₃) is preferably 0 percent by mass or greater and 20 percent by mass or less, more preferably 0.5 percent by mass or greater and 15 percent by mass or less, and yet more preferably 1 percent by mass or greater and 10 percent by mass or less. Since the first glass includes Al, chemical resistance of the first glass is improved, and stability as glass is enhanced. Since the amount of Al₂O₃ is 20 percent by mass or less, the viscosity of the first glass can be adjusted.

The first glass of the first glass powder is eluted during a first period. In the present specification, a period encompasses a predetermined time. Moreover, the phrase "glass is eluted" means that glass is dissolved into water and one or more elements included in the glass are sustainably released as ions.

The second glass powder includes second glass that includes at least one element.

The second glass is not particularly limited, but is preferably phosphate glass. As described above, the phosphate glass includes phosphorous pentoxide (P₂O₅) that contributes to formation of a network in glass.

In the second glass, an amount of P₂O₅ in the phosphate glass is preferably 40 percent by mass or greater, more preferably 45 percent by mass or greater, and yet more preferably 50 percent by mass or greater. Since the phosphate glass includes P₂O₅, phosphate ions (PO₄³⁻) released from the phosphate glass can impart an effect of preventing remineralization of dental tissues or tooth decay. Since the amount of P₂O₅ in the phosphate glass is 40 percent by mass or greater, glass is easily produced.

Note that the upper limit of the amount of P₂O₅ in the second glass is not limited, but is preferably 90 percent by mass or less, more preferably 80 percent by mass or less, and yet more preferably 70 percent by mass or less, from the viewpoint such that glass can be produced without a melting temperature of the glass becoming excessively high.

The second glass is preferably completely free of silicon oxide (SiO₂). In the case where the second glass includes SiO₂, an amount of SiO₂ is preferably 5 percent by mass or less. Since the second glass is completely free of SiO₂ or includes SiO₂ in the amount of 5 percent by mass or less, a decline in a sustained-release action of ions from the second glass can be inhibited.

The second glass includes at least one element that is different from the at least one element of the first glass. The element included in the second glass is an element for forming a sustained-release ion.

In the present specification, the element different from the element of the first glass indicates that at least one element included in the second glass is at least one element that is not included in the first glass. For example, in the case where the first glass includes zinc (Zn) and does not include lithium (Li), the second glass includes lithium (Li) or does not include zinc (Zn), or includes lithium (Li) and does not include zinc (Zn) .

The element to be included in the second glass is not particularly limited as long as the element is different from the element of the first glass. Examples of the element included in the second glass include Li, Ca, Sr, Ba, Y, La, Ce, Pr, Nd, Pm, Sm, Eu, Gd, Tb, Dy, Ho, Er, Tm, Yb, Lu, Ti, Zr, Ta, Cu, Ag, Zn, B, Ga, Sn, F, and the like. The above elements may be included independently or in combination. Among the above elements, Li, Ca, Sr, Cu, Ag, Zn, B, Ga, and F are preferred.

Among the above elements, Ca and Sr are preferred in view of an improvement in acid resistance of sustained-release ions, and Zn is preferred in view of inhibition of acid production. Moreover, Ca, Zn, and F are preferred from the viewpoint that sustained-release ions have an effect of inhibiting demineralization of dental tissues, and Ca and Sr are preferred in view of promotion of ossification. Further, Cu, Ag, Zn, B, Ga, and F are preferred in view of an antibacterial effect of the sustained-release ions, and Li is preferred in view of an anti-inflammatory action of the sustained-release ions.

In the case where Li is included in the second glass, an amount of Li in the second glass is not particularly limited, but the amount of Li in the form of lithium oxide (Li₂O) is preferably 0 percent by mass or greater and 30 percent by mass or less, more preferably 1 percent by mass or greater and 25 percent by mass or less, and yet more preferably 5 percent by mass or greater and 20 percent by mass or less. Since the second glass includes Li, an anti-inflammatory action can be imparted. Since the amount of Li₂O is 30 percent by mass or less, glass without dissolubility of a constituent component of the glass into water becoming excessively high is likely to be produced.

In the case where Ca is included in the second glass, an amount of Ca in the second glass is not particularly limited, but the amount of Ca in the form of calcium oxide (CaO) is preferably 0 percent by mass or greater and 25 percent by mass or less, more preferably 0.5 percent by mass or greater and 10 percent by mass or less, and yet more preferably 1 percent by mass or greater and 5 percent by mass or less. Since the second glass includes Ca, an acid resistance effect, an effect of inhibiting demineralization of dental tissues, and an ossification promoting action can be imparted. Since the amount of CaO is 25 percent by mass or less, glass is easily produced.

In the case where Sr is included in the second glass, an amount of Sr in the second glass is not particularly limited, but the amount of Sr in the form of strontium oxide (SrO) is preferably 0 percent by mass or greater and 50 percent by mass or less, more preferably 10 percent by mass or greater and 45 percent by mass or less, and yet more preferably 20 percent by mass or greater and 40 percent by mass or less. Since the second glass includes Sr, an acid resistance effect and an ossification promoting action can be imparted. Since the amount of SrO is 50 percent by mass or less, glass is easily produced without a melting temperature of the glass becoming excessively high.

In the case where Cu is included in the second glass, an amount of Cu in the second glass is not particularly limited, but the amount of Cu in the form of copper oxide (CuO) is preferably 0 percent by mass or greater and 10 percent by mass or less, more preferably 0.01 percent by mass or greater and 8 percent by mass or less, and yet more preferably 0.1 percent by mass or greater and 5 percent by mass or less. Since the second glass includes Cu, an antibacterial effect can be imparted. Since the amount of CuO is 10 percent by mass or less, glass is easily produced.

In the case where Ag is included in the second glass, an amount of Ag in the second glass is not particularly limited, but the amount of Ag in the form of silver oxide (Ag₂O) is preferably 0 percent by mass or greater and 5 percent by mass or less, more preferably 0.01 percent by mass or greater and 4 percent by mass or less, and yet more preferably 0.1 percent by mass or greater and 3 percent by mass or less. Since the second glass includes Ag, an antibacterial effect can be imparted. Since the amount of Ag₂O is 5 percent by mass or less, glass is easily produced.

In the case where Zn is included in the second glass, an amount of Zn in the second glass is not particularly limited, but the amount of Zn in the form of zinc oxide (ZnO) is preferably 0 percent by mass or greater and 45 percent by mass or less, more preferably 1 percent by mass or greater and 35 percent by mass or less, and yet more preferably 5 percent by mass or greater and 30 percent by mass or less. Since the second glass includes Zn, an acid-production inhibition effect, an effect of inhibiting demineralization of dental tissues, and an antibacterial effect can be imparted. Since the amount of ZnO is 45 percent by mass or less, glass is easily produced.

In the case where B is included in the second glass, an amount of B in the second glass is an amount of B in the form of boron oxide (B₂O₃), which is preferably 0 percent by mass or greater and 10 percent by mass or less, more preferably 0.1 percent by mass or greater and 9 percent by mass or less, and yet more preferably 1 percent by mass or greater and 8 percent by mass or less. Since the second glass includes B, an antibacterial effect can be imparted. Since the amount of B₂O₃ is 10 percent by mass or less, phase separation is inhibited, and glass is easily produced.

In the case where Ga is included in the second glass, an amount of Ga in the second glass is not particularly limited, but the amount of Ga in the form of gallium oxide (Ga₂O₃) is preferably 0 percent by mass or greater and 40 percent by mass or less, more preferably 0.1 percent by mass or greater and 38 percent by mass or less, and yet more preferably 1 percent by mass or greater and 35 percent by mass or less. Since the second glass includes Ga, an antibacterial effect can be imparted. Since the amount of Ga₂O₃ is 40 percent by mass or less, glass is easily produced.

In the case where F is included in the second glass, an amount of F in the second glass is not particularly limited, but the amount of F is preferably 0 percent by mass or greater and 25 percent by mass or less, more preferably 0.1 percent by mass or greater and 24 percent by mass or less, and yet more preferably 1 percent by mass or greater and 22 percent by mass or less. Since the second glass includes F, an effect of inhibiting demineralization of dental tissues and an antibacterial effect can be imparted. Since the amount of F is 25 percent by mass or less, glass is easily produced.

Note that in the glass powder composite of the present embodiment, the second glass may include, as other elements, sodium (Na), potassium (K), and aluminum (Al), as long as the object of the present invention is not impaired.

In the case where Na is included in the second glass, an amount of Na in the second glass is not particularly limited, but the amount of Na in the form of sodium oxide (Na₂O) is preferably 1 percent by mass or greater and 20 percent by mass or less, more preferably 3 percent by mass or greater and 15 percent by mass or less, and yet more preferably 5 percent by mass or greater and 10 percent by mass or less. Since the second glass includes Na, a melting temperature of glass is reduced, and dissolubility of the glass can be further enhanced. Since the amount of Na₂O is 20 percent by mass or less, glass without dissolubility of a constituent component of the glass into water becoming excessively high is likely to be produced.

In the case where K is included in the second glass, an amount of K in the second glass is not particularly limited, but the amount of K in the form of potassium oxide (K₂O) is preferably 1 percent by mass or greater and 20 percent by mass or less, more preferably 3 percent by mass or greater and 15 percent by mass or less, and yet more preferably 5 percent by mass or greater and 10 percent by mass or less. Since the second glass includes Na, a melting temperature of glass is reduced, and dissolubility of the glass can be further enhanced. Since the amount of K₂O is 20 percent by mass or less, glass without dissolubility of a constituent component of the glass into water becoming excessively high is likely to be produced.

In the case where Al is included in the second glass, an amount of Al in the second glass is not particularly limited, but the amount of Al in the form of aluminum oxide (Al₂O₃) is preferably 0 percent by mass or greater and 20 percent by mass or less, more preferably 0.5 percent by mass or greater and 15 percent by mass or less, and yet more preferably 1 percent by mass or greater and 10 percent by mass or less. Since the second glass includes Al, chemical resistance of the second glass is improved, and stability as glass is enhanced. Since the amount of Al₂O₃ is 20 percent by mass or less, the viscosity of the second glass can be adjusted.

The second glass of the second glass powder is eluted during a second period different from the first period. In the present specification, the second period different from the first period may be a second period that is longer than the first period, or a second period that is shorter than the first period.

For example, in the case where the second period is longer than the first period, during a stretch of time in the second period overlapping the first period, the first glass of the first glass powder is eluted, and the second glass of the second glass powder is eluted. Moreover, during a stretch of time in the second period after the first period has ended, the second glass of the second glass powder is eluted.

Specifically, in the case where the first glass includes Zn, and the second glass includes Li, the first glass powder sustainably releases Zn²⁺ and the second glass powder sustainably releases Li⁺ during the first period, and the second glass powder sustainably releases Li⁺ during the second period.

A difference between a residual ratio of the first glass and a residual ratio of the second glass is preferably 20% or greater, more preferably 25% or greater, and yet more preferably 30% or greater. In the present specification, the residual ratio may be also referred to as a dissolution ratio, which indicates a ratio of a mass of the glass that has not been dissolved after immersion relative to a mass of the glass before immersion, when the glass is immersed in water. The dissolution ratio is calculated according to the following equation. Dissolution ratio (%) = [(mass before immersion) - (mass after immersion)] × 100/mass before immersion

A mass ratio between the first glass and the second glass included in the glass powder composite is not particularly limited, but the mass ratio is, for example, 10:1 to 1:10, preferably 7:1 to 1:7, and more preferably 5:1 to 1:5.

In the glass powder composite of the present embodiment, at least one element included in the first glass may be the same as at least one element included in the second glass. For example, in the case where zinc (Zn) is included in the first glass, zinc (Zn) may be also included in the second glass.

The dissolution ratio is determined by dissolving glass in an acetic acid/sodium acetate buffer solution, and calculating according to the following equation. Dissolution ratio (%) = [(weight before immersion in the solution) - (weight after immersion in the solution)] × 100/weight before immersion in the solution

The glass powder composite according to the present embodiment may further include a third glass powder.

The third glass powder includes third glass including at least one element.

The third glass is not particularly limited, but is preferably phosphate glass. As described above, the phosphate glass includes phosphorous pentoxide (P₂O₅) that contributes to formation of a network in glass.

In the third glass, an amount of P₂O₅ in the phosphate glass is preferably 40 percent by mass or greater, more preferably 45 percent by mass or greater, and yet more preferably 50 percent by mass or greater. Since the phosphate glass includes P₂O₅, phosphate ions (PO₄³⁻) released from the phosphate glass can impart an effect of preventing remineralization of dental tissues or tooth decay. Since the amount of P₂O₅ in the phosphate glass is 40 percent by mass or greater, glass is easily produced.

Note that the upper limit of the amount of P₂O₅ in the third glass is not particularly limited, but is preferably 90 percent by mass or less, more preferably 80 percent by mass or less, and yet more preferably 70 percent by mass or less, from the viewpoint that glass can be produced without a melting temperature of the glass becoming excessively high.

The third glass is preferably completely free of silicon oxide (SiO₂). In the case where SiO₂ is included, an amount of SiO₂ is preferably 5 percent by mass or less. Since the third glass is completely free from SiO₂ or includes SiO₂ in the amount of 5 percent by mass or less, a decline in a sustained-release action of ions from the third glass can be inhibited.

The third glass includes at least one element that is different from the element of the first glass and the element of the second glass. The element included in the third glass is an element that constitutes a sustained-release ion.

In the present specification, the element different from the element of the first glass and the element of the second glass indicates that at least one element included in the third glass is an element that is not included in the first glass nor in the second glass. For example, in the case where the first glass includes zinc (Zn) but does not include strontium (Sr), and the second glass includes lithium (Li) but does not include strontium (Sr), strontium (Sr) is included in the third glass, but zinc (Zn) and lithium (Li) are not included in the third glass.

The element included in the third glass is not particularly limited as long as the element is an element different from the element of the first glass and the element of the second glass. Examples of the element included in the third glass include Li, Ca, Sr, Ba, Y, La, Ce, Pr, Nd, Pm, Sm, Eu, Gd, Tb, Dy, Ho, Er, Tm, Yb, Lu, Ti, Zr, Ta, Cu, Ag, Zn, B, Ga, Sn, F, and the like. One or more of the above elements may be included. Among the above elements, Li, Ca, Sr, Cu, Ag, Zn, B, Ga, and F are preferred.

Among the above elements, Ca and Sr are preferred in view of an improvement in acid resistance of sustained-release ions, and Zn is preferred in view of inhibition of acid production. Moreover, Ca, Zn, and F are preferred from a viewpoint that sustained-release ions have an effect of inhibiting demineralization of dental tissues, and Ca and Sr are preferred in view of promotion of ossification. Further, Cu, Ag, Zn, B, Ga, and F are preferred in view of an antibacterial effect of the sustained-release ions, and Li is preferred in view of an anti-inflammatory action of the sustained-release ions.

In the case where Li is included in the third glass, an amount of Li in the third glass is not particularly limited, but the amount of Li in the form of lithium oxide (Li₂O) is preferably 0 percent by mass or greater and 30 percent by mass or less, more preferably 1 percent by mass or greater and 25 percent by mass or less, and yet more preferably 5 percent by mass or greater and 20 percent by mass or less. Since the first glass includes Li, an anti-inflammatory action can be imparted. Since the amount of Li₂O is 30 percent by mass or less, glass without dissolubility of a constituent component of the glass into water becoming excessively high is likely to be produced.

In the case where Ca is included in the third glass, an amount of Ca in the third glass is not particularly limited, but the amount of Ca in the form of calcium oxide (CaO) is preferably 0 percent by mass or greater and 25 percent by mass or less, more preferably 0.5 percent by mass or greater and 10 percent by mass or less, and yet more preferably 1 percent by mass or greater and 5 percent by mass or less. Since the third glass includes Ca, an acid resistance effect, an effect of inhibiting demineralization of dental tissues, and an ossification promoting action can be imparted. Since the amount of CaO is 25 percent by mass or less, glass is easily produced.

In the case where Sr is included in the third glass, an amount of Sr in the third glass is not particularly limited, but the amount of Sr in the form of strontium oxide (SrO) is preferably 0 percent by mass or greater and 50 percent by mass or less, more preferably 10 percent by mass or greater and 45 percent by mass or less, and yet more preferably 20 percent by mass or greater and 40 percent by mass or less. Since the third glass includes Sr, an acid resistance effect and an ossification promoting action can be imparted. Since the amount of SrO is 50 percent by mass or less, glass is easily produced without a melting temperature of the glass becoming excessively high.

In the case where Cu is included in the third glass, an amount of Cu in the third glass is not particularly limited, but the amount of Cu in the form of copper oxide (CuO) is preferably 0 percent by mass or greater and 10 percent by mass or less, more preferably 0.01 percent by mass or greater and 8 percent by mass or less, and yet more preferably 0.1 percent by mass or greater and 5 percent by mass or less. Since the third glass includes Cu, an antibacterial effect can be imparted. Since the amount of CuO is 10 percent by mass or less, glass is easily produced.

In the case where Ag is included in the third glass, an amount of Ag in the third glass is not particularly limited, but the amount of Ag in the form of silver oxide (Ag₂O) is preferably 0 percent by mass or greater and 5 percent by mass or less, more preferably 0.01 percent by mass or greater and 4 percent by mass or less, and yet more preferably 0.1 percent by mass or greater and 3 percent by mass or less. Since the third glass includes Ag, an antibacterial effect can be imparted. Since the amount of Ag₂O is 5 percent by mass or less, glass is easily produced.

In the case where Zn is included in the third glass, an amount of Zn in the third glass is not particularly limited, but the amount of Zn in the form of zinc oxide (ZnO) is preferably 0 percent by mass or greater and 45 percent by mass or less, more preferably 1 percent by mass or greater and 35 percent by mass or less, and yet more preferably 5 percent by mass or greater and 30 percent by mass or less. Since the third glass includes Zn, an acid-production inhibition effect, an effect of inhibiting demineralization of dental tissues, and an antibacterial effect can be imparted. Since the amount of ZnO is 45 percent by mass or less, glass is easily produced.

In the case where B is included in the third glass, an amount of B in the third glass is an amount of B in the form of boron oxide (B₂O₃), which is preferably 0 percent by mass or greater and 10 percent by mass or less, more preferably 0.1 percent by mass or greater and 9 percent by mass or less, and yet more preferably 1 percent by mass or greater and 8 percent by mass or less. Since the third glass includes B, an antibacterial effect can be imparted. Since the amount of B₂O₃ is 10 percent by mass or less, phase separation is inhibited, and glass is easily produced.

In the case where Ga is included in the third glass, an amount of Ga included in the third glass is not particularly limited, but the amount of Ga in the form of gallium oxide (Ga₂O₃) is preferably 0 percent by mass or greater and 40 percent by mass or less, more preferably 0.1 percent by mass or greater and 38 percent by mass or less, and yet more preferably 1 percent by mass or greater and 35 percent by mass or less. Since the third glass includes Ga, an antibacterial effect can be imparted. Since the amount of Ga₂O₃ is 40 percent by mass or less, glass is easily produced.

In the case where F is included in the third glass, an amount of F in the third glass is not particularly limited, but the amount of F is preferably 0 percent by mass or greater and 25 percent by mass or less, more preferably 0.1 percent by mass or greater and 24 percent by mass or less, and yet more preferably 1 percent by mass or greater and 22 percent by mass or less. Since the third glass includes F, an effect of inhibiting demineralization of dental tissues, and an antibacterial effect can be imparted. Since the amount of F is 25 percent by mass or less, glass is easily produced.

Note that in the glass powder composite of the present embodiment, the third glass may include, as other elements, sodium (Na), potassium (K), and aluminum (Al), as long as the object of the present invention is not impaired.

In the case where Na is included in the third glass, an amount of Na in the third glass is not particularly limited, but the amount of Na in the form of sodium oxide (Na₂O) is preferably 1 percent by mass or greater and 20 percent by mass or less, more preferably 3 percent by mass or greater and 15 percent by mass or less, and yet more preferably 5 percent by mass or greater and 10 percent by mass or less. Since the third glass includes Na, a melting temperature of glass is reduced, and dissolubility of the glass can be further enhanced. Since the amount of Na₂O is 20 percent by mass or less, glass without dissolubility of a constituent component of the glass into water becoming excessively high is likely to be produced.

In the case where K is included in the third glass, an amount of K in the third glass is not particularly limited, but the amount of K in the form of potassium oxide (K₂O) is preferably 1 percent by mass or greater and 20 percent by mass or less, more preferably 3 percent by mass or greater and 15 percent by mass or less, and yet more preferably 5 percent by mass or greater and 10 percent by mass or less. Since the third glass includes Na, a melting temperature of glass is reduced, and dissolubility of the glass can be further enhanced. Since the amount of K₂O is 20 percent by mass or less, glass without dissolubility of a constituent component of the glass into water becoming excessively high is likely to be produced.

In the case where Al is included in the third glass, an amount of Al in the third glass is not particularly limited, but the amount of Al in the form of aluminum oxide (Al₂O₃) is preferably 0 percent by mass or greater and 20 percent by mass or less, more preferably 0.5 percent by mass or greater and 15 percent by mass or less, and yet more preferably 1 percent by mass or greater and 10 percent by mass or less. Since the third glass includes Al, chemical resistance of the second glass is improved, and stability as glass is enhanced. Since the amount of Al₂O₃ is 20 percent by mass or less, the viscosity of the third glass can be adjusted.

The third glass of the third glass powder is eluted during a third period different from the first period and the second period. In the present specification, the third period different from the first period and the second period may be a third period that is longer than the first period and the second period, or a third period that is shorter than the first period and the second period.

For example, in the case where the second period is longer than the first period, and the third period is longer than the second period, during a stretch of time in the third period overlapping the first period and the second period, the first glass of the first glass powder is eluted, the second glass of the second glass powder is eluted, and the third glass of the third glass powder is eluted. Moreover, during a stretch of time in the third period after the first period has ended, the second glass of the second glass powder is eluted, and the third glass of the third glass powder is eluted. Further, during a stretch of time in the third period after the second period has ended, the third glass of the third glass powder is eluted.

Specifically, in the case where the first glass includes Zn, the second glass includes Li, and the third glass includes Sr, the first glass powder sustainably releases Zn²⁺, the second glass powder sustainably releases Li⁺, and the third glass powder sustainably releases Sr²⁺ during the first period; the second glass powder sustainably releases Li⁺ and the third glass powder sustainably releases Sr²⁺ during the second period; and the third glass powder sustainably releases Sr²⁺ during the third period.

A difference between the residual ratio of the second glass and the residual ratio of the third glass is preferably 20% or greater, more preferably 25% or greater, and yet more preferably 30% or greater.

Since the glass powder composite includes the first glass powder, from which the first glass is eluted during the first period, and the second glass powder, from which the second glass is eluted during the second period different from the first period, as described above, a sustained-release action of ions can be varied according to the time elapsed.

Moreover, since the difference between the residual ratio of the first glass and the residual ratio of the second glass is 20% or greater in the glass powder composite of the present embodiment as described above, an effect of varying a sustained-release action of ions according to the time elapsed becomes significant.

Since the first glass, the second glass, or both the first glass and the second glass in the glass powder composite of the present embodiment are phosphate glass as described above, a sustained-release action of ions of the element included in the first glass, the second glass, or both can be elevated.

Since the first glass, the second glass, or both the first glass and the second glass in the glass powder composite of the present embodiment include sodium (Na) as described above, a melting temperature of glass is reduced, and dissolubility (a sustained-release action of ions) of the glass can be enhanced.

Since the first glass, the second glass, or both the first glass and the second glass in the glass powder composite of the present embodiment include aluminum (Al) as described above, chemical resistance of the first glass, the second glass, or both can be improved, and stability as glass can be enhanced.

Since the first glass or the second glass in the glass powder composite of the present embodiment includes lithium (Li) as described above, an anti-inflammatory action can be imparted.

Since the first glass or the second glass in the glass powder composite of the present embodiment includes zinc (Zn) as described above, an acid-production inhibition effect, an effect of inhibiting demineralization of dental tissues, and an antibacterial effect can be imparted.

Since the first glass or the second glass in the glass powder composite of the present embodiment includes strontium (Sr) as described above, an acid resistance effect and an ossification promoting action can be imparted.

Since the glass powder composite of the present embodiment further includes the third glass powder, from which the third glass is eluted during the third period different from the first period and the second period, as described above, the variety of the effect of varying a sustained-release action of ions according to the time elapsed can be increased.

Use of the glass powder composite of the present embodiment is not particularly limited. Examples of the use include resins or coating films exhibiting an antibacterial action as the time elapses, and soil modifiers. Moreover, examples of the use include bone filler adapted to a change in bone resorption or ossification occurring as the time elapses, or a change in the condition of the oral cavity.

As one example of the use of the glass powder composite, a case where the glass powder composite of the present embodiment is used for a dental material will be described. The dental composition according to the present embodiment includes the above-described glass powder composite. In the present specification, the dental composition encompasses a composition used for a dental material.

Specifically, the glass powder composite used in the dental composition includes a first glass powder including first glass and a second glass powder including second glass, where the first glass includes at least one element and is eluted during a first period, and the second glass includes at least one element different from the at least one element of the first glass, and is eluted during a second period different from the first period.

For example, in the case where the second period is longer than the first period, during a stretch of time in the second period overlapping the first period, the first glass of the first glass powder is eluted and the second glass of the second glass powder is eluted into the oral cavity. Moreover, during a stretch of time in the second period after the first period has ended, the second glass of the second glass powder is eluted into the oral cavity.

Specifically, in the case where the first glass includes Zn, and the second glass includes Li, in the oral cavity, the first glass powder sustainably releases Zn²⁺ and the second glass powder sustainably releases Li⁺ during the first period, and the second glass powder sustainably releases Li⁺ during the second period.

Moreover, in the glass powder composite used for a dental composition, a difference between the residual ratio of the first glass and the residual ratio of the second glass is preferably 20% or greater, more preferably 25% or greater, and yet more preferably 30% or greater.

Since the dental composition of the present embodiment includes the above-described glass powder composite, the above-described effects of the glass powder composite can be obtained. Specifically, since the glass powder composite included in the dental composition includes the first glass powder from which the first glass is eluted during the first period, and the second glass powder from which the second glass is eluted during the second period different from the first period, a sustained-release action of ions in the oral cavity can be varied according to the time elapsed.

Moreover, since the dental composition of the present embodiment includes the glass powder composite in which the difference between the residual ratio of the first glass and the residual ratio of the second glass is 20% or greater as described above, an effect of varying a sustained-release action of ions in the oral cavity according to the time elapsed becomes significant.

Note that the dental composition of the present embodiment may further include components other than the above-described glass powder composite. The components other than the glass powder composite included in the dental composition of the present embodiment are not particularly limited. For example, the dental composition can include a polymer, such as polyacrylic acid. The dental composition can constitute an ionomer cement by mixing the glass powder composite and a polymer such as polyacrylic acid.

Moreover, the dental composition of the present embodiment may include, as other optional components, a curing accelerator, such as hydrochloride, sulfate, or the like, an oily component, such as hydrocarbons, higher fatty acids, esters, or the like, various inorganic or organic colorants, an antibacterial material, fragrance, and the like, as long as the object of the present invention is not impaired.

The dental composition of the present embodiment can be used for various dental materials. Use of the dental composition of the present embodiment is not particularly limited. Examples of the use of the present embodiment include dental cements, dental adhesives, dental temporal sealing materials, dental temporal bonding materials, dental primers, dental coating agents, root surface coating materials, dental composite resins, dental hard resins, dental resin materials for machining, dental temporal restorative materials, dental fillers, pulp capping materials, bone prosthetic materials, bone cements, denture base materials, artificial teeth, dentifrice, and the like.

The method of producing the glass powder composite according to the present embodiment is a method of substantially producing the above-described glass powder composite. Specifically, the method of producing the glass powder composite includes mixing of a first glass powder including first glass and a second glass powder including second glass, where the first glass includes at least one element and is eluted during a first period, and the second glass includes at least one element different from the at least one element of the first glass, and is eluted during a second period different from the first period.

In the mixing of the first glass powder and the second glass powder in the method of producing the glass powder composite according to the present embodiment, the first glass powder and the second glass powder included in the above-described glass powder composite are used. Therefore, the glass powder composite obtained by the method of producing according to the present embodiment can obtain the above-described effects of the glass powder composite.

Specifically, the obtained glass powder composite is a glass powder composite that includes a first glass powder including first glass, and a second glass powder including second glass, where the first glass includes at least one element and is eluted during a first period, the second glass includes at least one element different from the at least one element of the first glass and is eluted during a second period different from the first period, and both the first glass powder and the second glass powder demonstrate sustained release of ions. Thus, according to the method of producing according to the present embodiment, a glass powder composite which can vary a sustained-release action of ions according to the time elapsed can be produced.

### Examples

The present invention will be further described through Examples thereinafter. Various tests and evaluations were performed according to the following methods. Note that in the following description, numerical values without units or "%" are based on mass unless otherwise specified.

### <Preparation of glass powders>

Glass powders (Glass 1 to 9) having the compositions presented in Table 1 were prepared. First, raw materials were weighed, and mixed in a mortar for 10 minutes. The resultant mixture was placed in a platinum crucible, and melted at 1,100°C for 1 hour. The melt was cooled by an iron press. The resultant was pulverized for 30 minutes by a ball mill (ethanol wet pulverization, 40 mm alumina balls, 100 rpm), and further pulverized for 30 minutes by a ball mill (ethanol wet pulverization, 5 mm alumina balls, 100 rpm). Thereafter, a glass powder was recovered by centrifugation, and the remaining ethanol was evaporated by vacuum drying (gauge pressure: -0.1 MPa, 40°C), to thereby obtain a glass powder (each of Glass 1 to Glass 9).

**[Table 1]**

| Glass powder/% mass | Glass 1 | Glass 2 | Glass 3 | Glass 4 | Glass 5 | Glass 6 | Glass 7 | Glass 8 | Glass 9 |
|---|---|---|---|---|---|---|---|---|---|
| P₂O₅ | 60.5 | 59.8 | 50.8 | 72.6 | 71.4 | 69.0 | 56.8 | 56.4 | 55.6 |
| Na₂O | 25.2 | 8.7 | 19.0 | 12.1 | 11.9 | 11.5 | 11.0 | 9.8 | 7.5 |
| Li₂O | | | | 15.3 | 14.3 | 12.4 | | | |
| CaO | 2.3 | | | | | | | | |
| Al₂O₃ | 2.1 | 4.8 | 5.2 | | 2.4 | 7.1 | | 1.8 | 5.3 |
| SrO | | | | | | | 32.2 | 32.0 | 31.6 |
| ZnO | 9.9 | 26.7 | 25.0 | | | | | | |
| Dissolution ratio (Residual ratio) | 0.1% | 43.3% | 94.7% | 4.3% | 31.6% | 80.4% | 58.0% | 72.1% | 74.1% |

### <Compositions of glass powders>

The compositions of the obtained glass powders (Glass 1 to Glass 9) were confirmed. Each glass powder (molded by a polyvinyl chloride ring) was analyzed by a fluorescent X-ray analyzer (ZSX Primus IV, produced by Rigaku Corporation), thereby determining the composition of the glass powder. The results are presented in Table 1.

### <Particle size of glass powder>

The particle size of each of the obtained glass powders (Glass 1 to Glass 9) was measured. The particle size of the glass powder is a median diameter (D50) at which a volume-based cumulative distribution measured by a laser diffraction-scattering method is 50%. The glass powder was dispersed in ethanol, and measured by a laser diffraction-scattering particle size distribution analyzer (Partica (registered trademark) LA-960V2, produced by Horiba, Ltd.). It was confirmed that each glass powder had D50 of 10 ± 2 µm.

### <Dissolution ratio of glass>

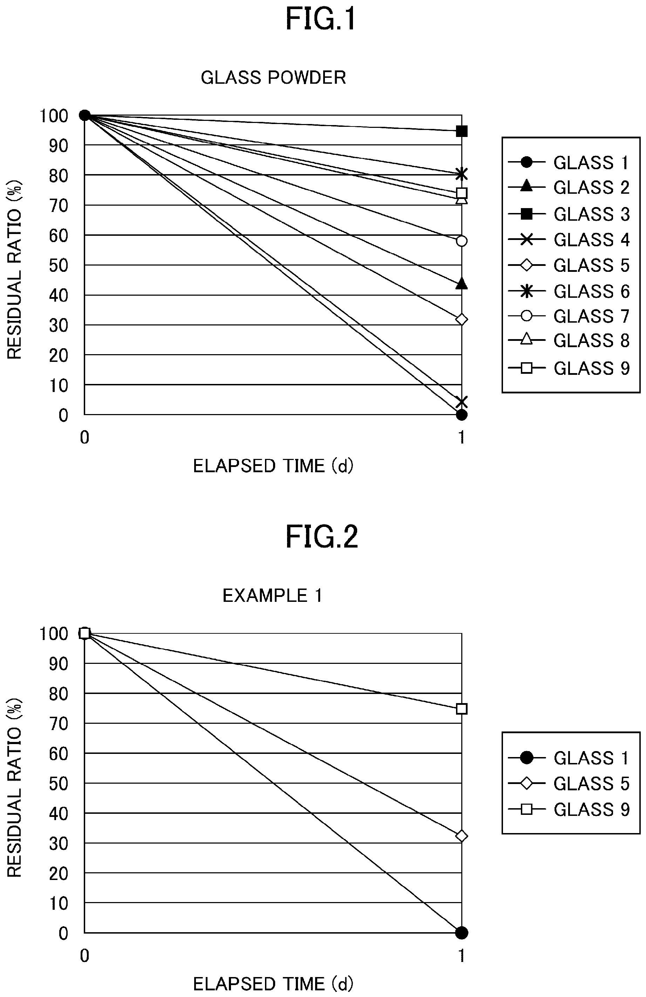

The glass powder in an amount of 50 mg was immersed in 10 mL of distilled water (pH 7), and stored at 37°C, followed by being filtered with a 0.2 µm syringe filter. The glass after the filtration was dried together with the syringe filter at 60°C for 48 hours. Thereafter, the weight of the syringe filter and the glass was measured, and an amount of the dissolved glass and a dissolution ratio (residual ratio) were calculated. The residual ratios of the glass powders (Glass 1 to Glass 9) are depicted in Fig. 1 and Table 1.

The dissolution ratio of the glass was determined as a glass residual ratio after the glass powder composite was immersed in distilled water for one day. The dissolution rate of the glass powder constituting the glass powder composite was classified into the following three types (1) to (3) from the glass residual ratio.
(1) Fast: the residual ratio of less than 5% (dissolved within several hours)
(2) Normal: the residual ratio of 5% or greater and less than 60% (dissolved within several days)
(3) Slow: the residual ratio of 60% or greater (dissolved within several weeks)

### <Dissolubility of glass powder composite>

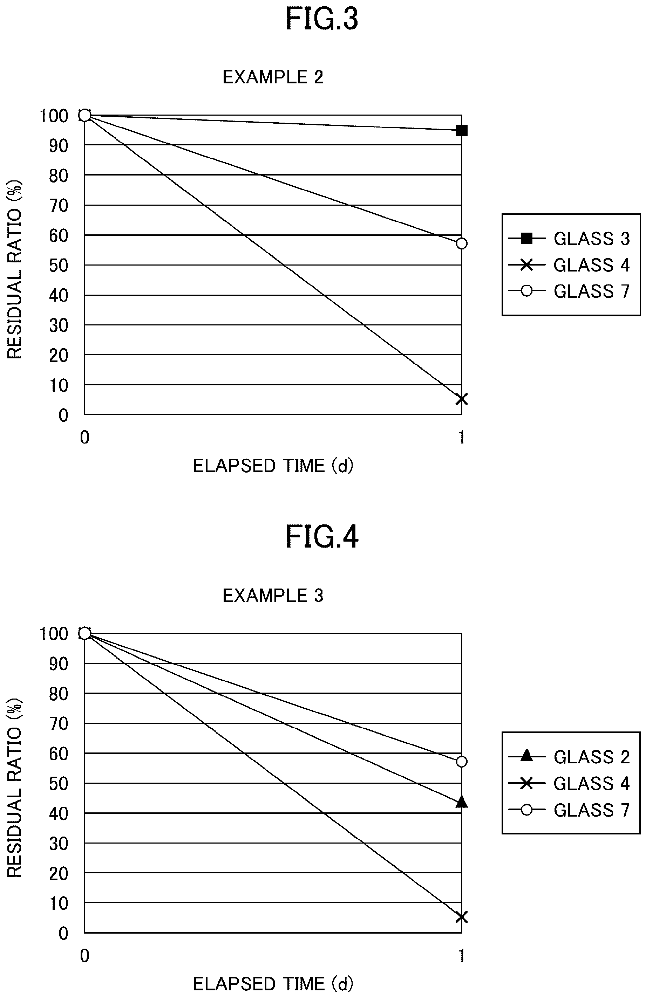

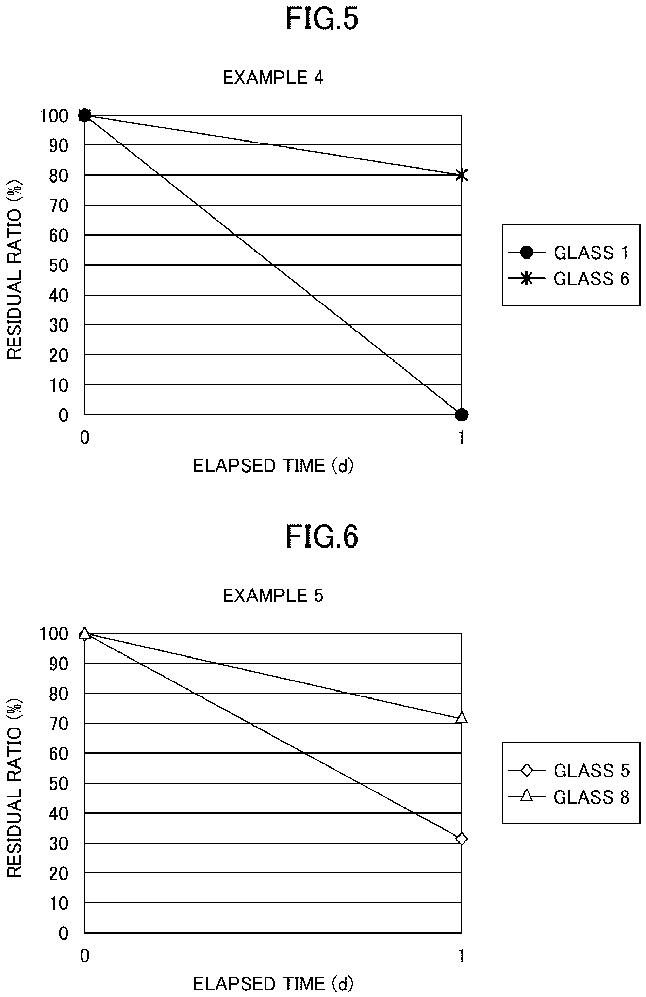

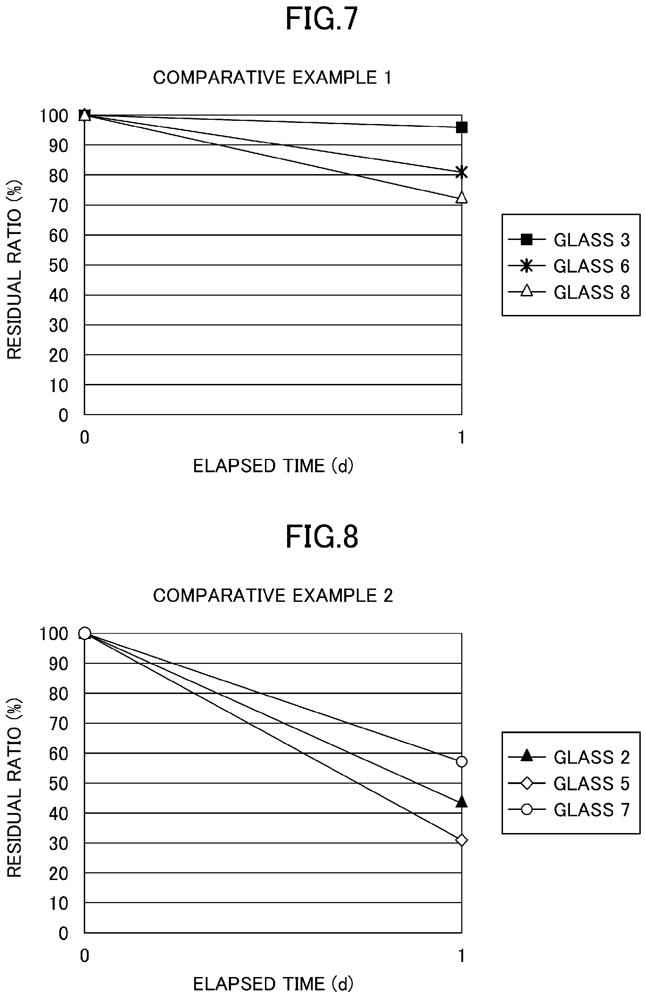

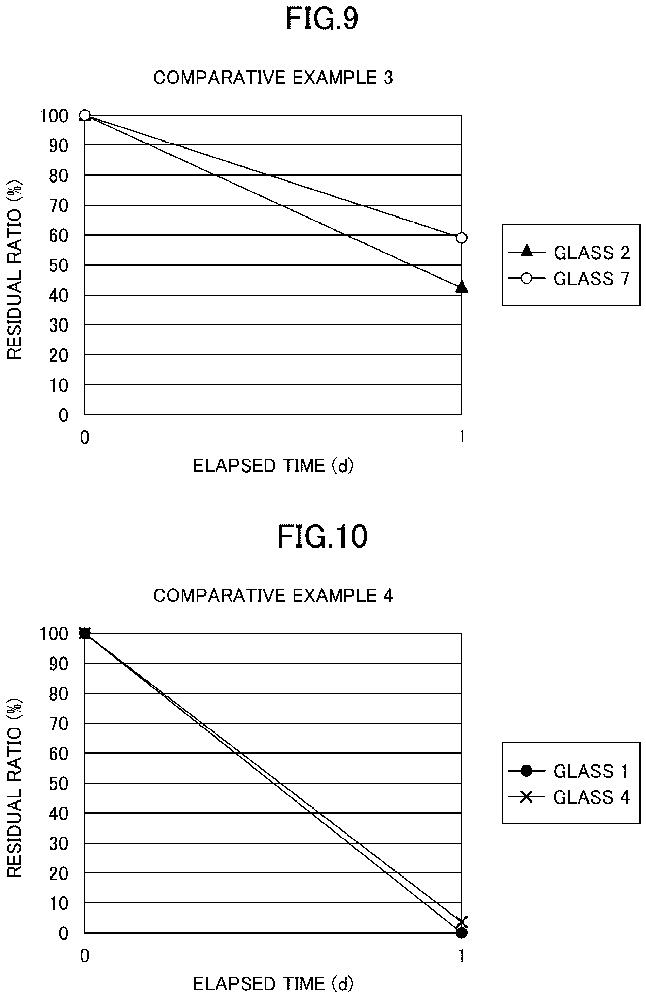

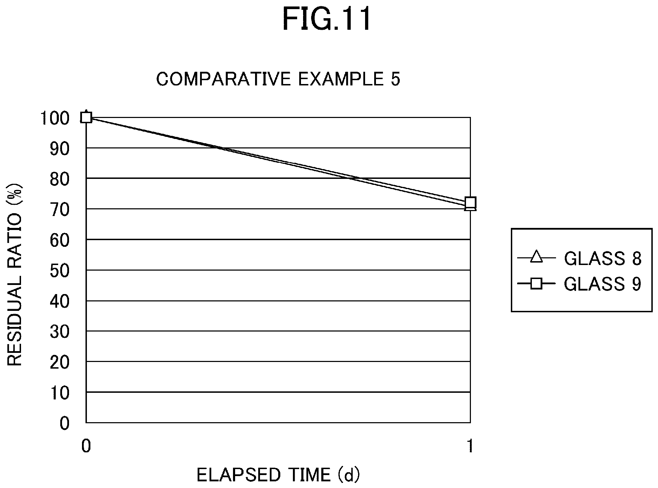

With reference to Table 1, a glass powder composite in which one or more different ions were eluted stepwise was prepared by mixing two or more glass powders. The glass powder composites (Examples 1 to 5 and Comparative Examples 1 to 5) obtained by combining the glass powders of (1) to (3) above are presented in Table 2, and residual ratios of the glass powder composites are depicted in Figs. 2 to 11.

**[Table 2]**

| Glass powder composite | Residual ratio | Dissolution rate | Ex. 1 | Ex. 2 | Ex. 3 | Ex. 4 | Ex. 5 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|
| Glass 1 | 0.1% | fast | ✔ | - | - | ✔ | - | - | - | - | ✔ | - |
| Glass 2 | 43.3% | normal | - | - | ✔ | - | - | - | ✔ | ✔ | - | - |
| Glass 3 | 94.7% | slow | - | ✔ | - | - | - | ✔ | - | - | - | - |
| Glass 4 | 4.3% | fast | - | ✔ | ✔ | - | - | - | - | - | ✔ | - |
| Glass 5 | 31.6% | normal | ✔ | - | - | - | ✔ | - | ✔ | - | - | - |
| Glass 6 | 80.4% | slow | - | - | - | ✔ | - | ✔ | - | - | - | - |
| Glass 7 | 58.0% | normal | - | ✔ | ✔ | - | - | - | ✔ | ✔ | - | - |
| Glass 8 | 72.1% | slow | - | - | - | - | ✔ | ✔ | - | - | - | ✔ |
| Glass 9 | 74.1% | slow | ✔ | - | - | - | - | - | - | - | - | ✔ |
| | | | | | | | | | | | | |
| Elution of different time spans | | | Yes | Yes | Yes | Yes | Yes | No | No | No | No | No |
| Ions eluted for several hours | | | Zn | Li | Li | Zn | - | - | - | - | Zn, Li | - |
| Ions eluted for several days | | | Li | Sr | Zn, Sr | - | Li | - | Zn, Li, Sr | Zn, Sr | - | - |
| Ions eluted for several weeks | | | Sr | Zn | - | Li | Sr | Zn, Li, Sr | - | - | - | Sr |

It can be understood from Tables 1 and 2 that a glass powder composite obtained by combining two or more glass powders having different dissolution rates (difference in the residual ratio being 20% or greater) can elute one or more different ions in different time spans (Examples 1 to 5).

Conversely, it is understood that a glass powder composite obtained by combining two or more glass powders having similar dissolution rates (difference in the dissolution ratio being less than 20%) cannot elute one or more different ions at different timings (Comparative Examples 1 to 5).

As described above, the glass powder composite including the first glass powder including the first glass and the second glass powder including the second glass, where the first glass includes at least one element and is eluted during a first period, and the second glass includes at least one element different from the at least one element of the first glass and is eluted during a second period different from the first period, can vary a sustained-release action of ions according to the time elapsed.

The embodiments described above include, for example, the following embodiments.

### (Clause 1)

A glass powder composite including:
a first glass powder including first glass, the first glass including at least one element, and the first glass being eluted during a first period; and
a second glass powder including second glass, the second glass including at least one element different from the at least one element of the first glass, and the second glass being eluted during a second period different from the first period.

### (Clause 2)

The glass powder composite according to Clause 1,
wherein a difference between a residual ratio of the first glass and a residual ratio of the second glass is 20% or greater.

### (Clause 3)

The glass powder composite according to Clause 1 or 2,
wherein the first glass, the second glass, or both the first glass and the second glass are phosphate glass.

### (Clause 4)

The glass powder composite according to any one of Clauses 1 to 3,
wherein the first glass, the second glass, or both the first glass and the second glass include sodium.

### (Clause 5)

The glass powder composite according to any one of Clauses 1 to 4,
wherein the first glass, the second glass, or both the first glass and the second glass include aluminum.

### (Clause 6)

The glass powder composite according to any one of Clauses 1 to 5,
wherein the first glass, the second glass, or both the first glass and the second glass include lithium.

### (Clause 7)

The glass powder composite according to any one of Clauses 1 to 6,
wherein the first glass or the second glass includes zinc.

### (Clause 8)

The glass powder composite according to any one of Clauses 1 to 7,
wherein the first glass or the second glass includes strontium.

### (Clause 9)

The glass powder composite according to any one of Clauses 1 to 8, further including:
a third glass powder including third glass, the third glass including at least one element different from the at least one element of the first glass and the at least one element of the second glass, and the third glass being eluted during a third period different from the first period and the second period.

### (Clause 10)

A method of producing a glass powder composite, the method including:
mixing
a first glass powder including first glass, the first glass including at least one element, and the first glass being eluted during a first period, and
a second glass powder including second glass, the second glass including at least one element different from the at least one element of the first glass, and the second glass being eluted during a second period different from the first period.

While embodiments of the present invention have been described above, the present invention is not limited to specific embodiments, and various modifications and variations are possible within the scope of the invention as claimed.

The present application is based on and claims priority to Japanese Patent Application No. 2022-164278, filed October 12, 2022, the contents of which are incorporated herein by reference.

## Claims

1. A glass powder composite comprising:
a first glass powder including first glass, the first glass including at least one element, and the first glass being eluted during a first period; and
a second glass powder including second glass, the second glass including at least one element different from the at least one element of the first glass, and the second glass being eluted during a second period different from the first period.

2. The glass powder composite according to claim 1,
wherein a difference between a residual ratio of the first glass and a residual ratio of the second glass is 20% or greater.

3. The glass powder composite according to claim 1 or 2,
wherein the first glass, the second glass, or both the first glass and the second glass are phosphate glass.

4. The glass powder composite according to claim 1 or 2,
wherein the first glass, the second glass, or both the first glass and the second glass include sodium.

5. The glass powder composite according to claim 1 or 2,
wherein the first glass, the second glass, or both the first glass and the second glass include aluminum.

6. The glass powder composite according to claim 1 or 2,
wherein the first glass, the second glass, or both the first glass and the second glass include lithium.

7. The glass powder composite according to claim 1 or 2,
wherein the first glass or the second glass includes zinc.

8. The glass powder composite according to claim 1 or 2,
wherein the first glass or the second glass includes strontium.

9. The glass powder composite according to claim 1 or 2, further comprising:
a third glass powder including third glass, the third glass including at least one element different from the at least one element of the first glass and the at least one element of the second glass, and the third glass being eluted during a third period different from the first period and the second period.

10. A method of producing a glass powder composite, the method comprising:
mixing
a first glass powder including first glass, the first glass including at least one element, and the first glass being eluted during a first period, and
a second glass powder including second glass, the second glass including at least one element different from the at least one element of the first glass, and the second glass being eluted during a second period different from the first period.
